# EUROPÄISCHE PATENTSCHRIFT

(11) **EP 1 289 792 B1**
(45) Veröffentlichungstag und Bekanntmachung des Hinweises auf die Patenterteilung: **13.10.2004**
(21) Anmeldenummer: 01962738.9
(22) Anmeldetag: 13.06.2001
(51) Int. Cl.: B60L 5/02, B60L 5/32

(54) **STROMABNEHMER FÜR ELEKTRISCH BETRIEBENE SCHIENENFAHRZEUGE**
CURRENT COLLECTOR FOR ELECTRICALLY POWERED RAIL VEHICLES
PANTOGRAPHE POUR VEHICULE FERROVIAIRE A TRACTION ELECTRIQUE

(30) Priorität: 16.06.2000 DE 10028948
(43) Veröffentlichungstag der Anmeldung: 12.03.2003
(73) Patentinhaber: DB Cargo AG, 55116 Mainz (DE); Stemmann-Technik GmbH, 48465 Schüttorf (DE)
(72) Erfinder: STAPFF, Martin, 81245 München (DE); ÜTRECHT, Werner, 48465 Schüttorf (DE); GERLACH, Wolfgang, 48599 Gronau (DE)
(74) Vertreter: Zinken-Sommer, Rainer
(86) Internationale Anmeldenummer: PCT/EP2001/006723
(87) Internationale Veröffentlichungsnummer: WO 2001/096137

(56) Entgegenhaltungen:
- EP-A- 0 449 704
- DE-A- 2 165 813
- GB-A- 232 985

## Beschreibung

Die Erfindung betrifft einen Stromabnehmer für elektrisch betriebene Schienenfahrzeuge gemäß den Merkmalen im Oberbegriff des Patentanspruchs 1.

Stromabnehmer dieser Ausgestaltung sind insbesondere in Form von Einholmstromabnehmern und Scherenstromabnehmern bekannt. Sie weisen ein durch gelenkig miteinander verbundene Arme gebildetes Gestell und eine an das Gestell angelenkte, an einen Fahrdraht andrückbare Wippe auf. Das Gestell ist mittels eines Hubantriebs sowie eines Senkantriebs in vertikaler Richtung bei Veränderung seiner Geometrie zwischen einer oberen Betriebsstellung und einer eingefahrenen unteren Ruheposition verstellbar. In der Ruheposition ist das Gestell auf Puffern abgestützt, die unmittelbar am Fahrzeugdach oder an einem auf dem Fahrzeugdach befindlichen Grundrahmen für das Gestell befestigt sind.

Obwohl sich die vorbeschriebenen Bauarten von Stromabnehmern in der Praxis bewährt haben, ergeben sich dennoch in der kalten Jahreszeit Probleme dahingehend, dass die Kraft der Hubantriebe nicht ausreicht, um die Gestelle aus der Ruheposition in die Betriebsstellung zu verlagern. Ursache ist die Verklammerung des Gestells mit den Puffern durch Vereisung. Dies ist aus den internen Störungs-Protokollen der Fahrzeug-Betreiber nachvollziehbar. Um diesen Zustand zu beseitigen und die Betriebsbereitschaft der Schienenfahrzeuge herzustellen, war es bislang in der Regel erforderlich, dass die Schienenfahrzeuge unter Einsatz von fremden Zugmaschinen in eine Werkshalle abgeschleppt werden mussten, so dass die Vereisungen hier beseitigt werden konnten. In einer solchen Werkshalle war es bei entsprechendem Dachstand und ohne bzw. spannungsloser Fahrleitung möglich, die vereisten Schienenfahrzeuge zu besteigen, um die Vereisungen ggf. manuell zu beseitigen.

Es ist somit ersichtlich, dass mit den Vereisungen der Stromabnehmer erhebliche Nachteile in bezug auf mangelnde Einsatzbereitschaft der Schienenfahrzeuge sowie erhöhten Aufwand zwecks Wiederherstellung der Einsatzbereitschaft verbunden waren.

Aus GB 232 985 ist eine Stromabnehmer bekannt, dessen Anheben durch Hilfskolben unterstützt wird, die hydraulisch oder pneumatisch betätigt werden. Hierbei liegt der Stromabnehmer in seiner Ruheposition im Bereich der Wippe auf den Hilfskolben auf. Ein Anheben des Stromabnehmers wird durch die Hilfskolben unterstützt, indem die Hilfskolben hydraulisch oder pneumatisch von unten gegen das Gestell des Stromabnehmers gedrückt werden und um eine bestimmte Anhubhöhe ausgefahren werden. Nachteil dieses Verfahren ist, dass bei Vereisung in der kalten Jahreszeit die Hilfskolben direkt mit dem das Gestell des Stromabnehmers vereist sind, so dass durch die Bewegung der Hilfskolben die Vereisung nicht gelöst wird. Desweiteren liegt das Gestell des Stromabnehmers in der Ruheposition andauernd auf den Hilfskolben auf, wodurch die Hilfskolben einer Dauerbelastung durch das Gewicht des Gestells des Stromabnehmers und somit einem erhöhtem Verschleiß ausgesetzt sind.

Aus der OS 2165813 ist ein zweiteiliger Scherenstromabnehmer bekannt, bei dem einer Hauptschere ein massearmer Miniaturstromabnehmer aufgesetzt ist. In Ergänzung zu den ansonsten üblichen Bauformen sieht diese Ausführungsart ein Stellglied im Bereich des Miniaturstromabnehmers vor. Dieses ist in einen Regelkreis eingebettet, der eine den Schwankungen der Fahrdrahthöhe folgende aktive Hubänderung bewerkstelligen soll. Durch die auf den Miniaturstromabnehmer begrenzte Wirksamkeit können jedoch auch Stromabnehmer dieser speziellen Ausführungsform im Winterbetrieb vereisen und in Ruhestellung festfrieren.

Der Erfindung liegt ausgehend vom Stand der Technik die Aufgabe zugrunde, einen Stromabnehmer für elektrisch betriebene Schienenfahrzeuge zu schaffen, der es einem Fahrzeugführer ermöglicht, eine durch Vereisung hervorgerufene Blockade des Gestells in der Ruheposition aufzuheben, ohne dass dazu ein Schienenfahrzeug aus dem Verkehr gezogen und seine Einsatzbereitschaft in einem hierzu geeigneten Wartungsbereich wieder hergestellt werden muss.

Die Lösung dieser Aufgabe besteht nach der Erfindung in den im kennzeichnenden Teil des Patentanspruchs 1 aufgeführten Merkmalen.

Diese Kolben-Zylinder-Einheiten, welche elektrisch oder hydraulisch, bevorzugt jedoch pneumatisch beaufschlagbar sind, werden derart dem Gestell zugeordnet, dass ihre Wirkkraft in Richtung zur Betriebsstellung des Gestells weist. Sie unterstützen damit den Hubantrieb und heben die durch eine Vereisung hervorgerufene Blockade auf. Außerdem ist ihre Relativzuordnung derart, dass bei ihrer Aktivierung keine unzulässigen Biegemomente in das Gestell eingeleitet werden. Die Kolben-Zylinder-Einheiten können prinzipiell allen Bereichen des Gestells zugeordnet werden, die geeignet sind, einen Stromabnehmer bei einer Vereisung unmittelbar durch einen Fahrzeugführer aus der Ruheposition in die Betriebsstellung zu verlagern.

Da die Kolben-Zylinder-Einheiten nur kurze Hübe vollziehen müssen, um das gewünschte Ergebnis zu bringen, können sie vergleichsweise einfach ausgebildet werden. Dies kommt auch dem Sachverhalt positiv entgegen, dass diese Kolben-Zylinder-Einheiten allen Witterungseinflüssen ausgesetzt sind.

Ein weiter Vorteil der Erfindung ist, dass das Gestell des Stromabnehmers in der Ruheposition auf Puffern und nicht auf den Kolben-Zylinder-Einheiten aufliegt. Hierdurch werden die Kolben-Zylinder-Einheiten einem geringeren Verschleiß ausgesetzt und die Pneumatik bzw. Hydraulik des Systems bleibt für einen langen Zeitraum dicht.

Eine vorteilhafte Ausführungsform der Erfindung besteht in den Merkmalen des Patentanspruchs 2. Danach sind die Kolben-Zylinder-Einheiten neben den Puffern angeordnet. Eine solche Bauart kommt insbesondere dann in Frage, wenn bestehende Stromabnehmer nachgerüstet werden sollen. Die zusätzliche Integration der Kolben-Zylinder-Einheiten bildet dann kein besonderes Problem. Auch ist die unmittelbare Nähe der Kolben-Zylinder-Einheiten zu den Puffern eine vorteilhafte Maßnahme, um keine schädlichen Biegemomente in das Gestell einzuleiten.

Nach Patentanspruch 3 können die Kolben-Zylinder-Einheiten aber auch in die Puffer integriert sein. Eine derartige Ausführungsform ist vorzugsweise dann von Vorteil, wenn ein Stromabnehmer neu gebaut wird. Auf diese Weise wird bei einer Aktivierung der Kolben-Zylinder-Einheiten jegliches Biegemoment vermieden.

Eine in der Praxis auch unter Montagegesichtspunkten zweckmäßige Ausführungsform sehen die Merkmale des Patentanspruchs 4 vor. Hierbei werden die Gehäuse der Kolben-Zylinder-Einheiten auf einem gegenüber dem Fahrzeugdach isolierten Grundrahmen befestigt, der auch das Gestell trägt. Die freien Enden der Kolbenstangen der Kolben-Zylinder-Einheiten tragen Druckköpfe, die vorteilhaft dem ihnen jeweils gegenüber liegenden Bereich des Gestells angepasst sind. Außerdem sind die Druckköpfe zu den Kolbenstangen relativ verstellbar und einstellbar.

Es ist erfindungsgemäß denkbar, dass die Kolben-Zylinder-Einheiten vor der Auslösung des Hubantriebs aktivierbar sind. Die Merkmale des Patentanspruchs 5 sehen jedoch vor, dass die Kolben-Zylinder-Einheiten zugleich mit dem Hubantrieb des Gestells aktivierbar sind. Sie bilden hierbei eine grundsätzliche Unterstützung für den Hubantrieb, um die bei einer Vereisung zur Verlagerung des Gestells aus der Ruheposition notwendige Losbrechkraft zu minimieren.

Wird der Stromabnehmer als Einholmstromabnehmer ausgebildet, so ist es entsprechend Patentanspruch 6 von besonderem Vorteil, wenn die Kolben-Zylinder-Einheiten derart unmittelbar auf dem Fahrzeugdach oder an einem auf dem Fahrzeugdach isoliert fixierten Grundrahmen vorgesehen werden, dass sie an der die Wippe tragenden Traverse endseitig des Oberarms des Einholmstromabnehmers zur Anlage bringbar sind.

Die Erfindung ist nachfolgend anhand eines in den Zeichnungen dargestellten Ausführungsbeispiels näher erläutert. Es zeigen:
- Figur 1: in schematischer Seitenansicht einen Stromabnehmer für ein elektrisch betriebenes Schienenfahrzeug in der Betriebsstellung;
- Figur 2: den Stromabnehmer der Figur 1 in der eingefahrenen unteren Ruheposition;
- Figur 3: einen Horizontalschnitt durch die Darstellung der Figur 1 entlang der Linie III-III in Richtung des Pfeils IIIa gesehen, teilweise ausgebrochen veranschaulicht;
- Figur 4: in vergrößerter Darstellung einen Vertikalschnitt durch die Darstellung der Figur 3 entlang der Linie IV-IV in Richtung des Pfeils IVa gesehen und
- Figur 5: die Darstellung der Figur 4 in Richtung des Pfeils V gesehen.

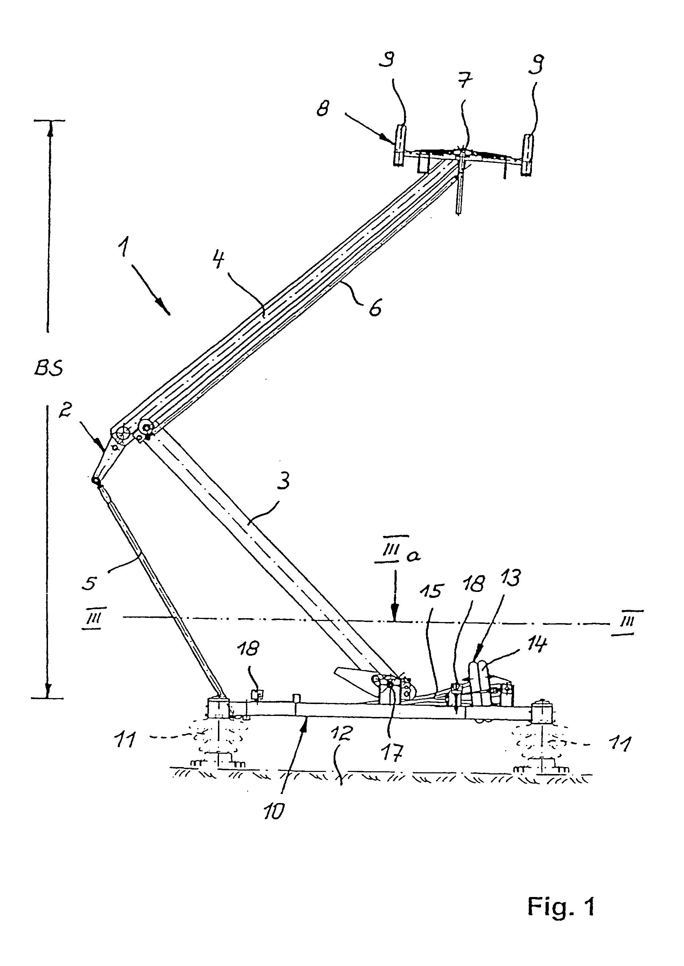

Mit 1 ist in den Figuren 1 bis 3 ein Stromabnehmer für elektrisch betriebene Schienenfahrzeuge in Form eines Einholmstromabnehmers bezeichnet.

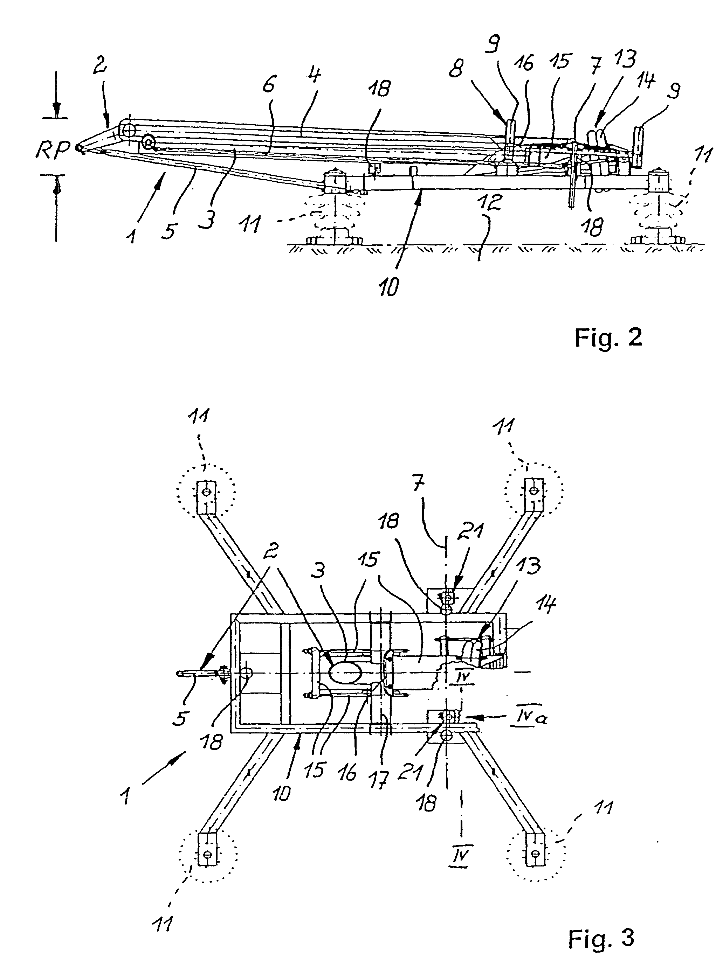

Der Stromabnehmer 1 weist ein Gestell 2 auf, das sich im wesentlichen aus einem Unterarm 3, einem Oberarm 4, einer Lenkerstange 5 und einer Wippenführung 6 zusammensetzt. Am freien Ende des Oberarms 4 befindet sich eine Traverse 7, welche der begrenzt raumgelenkigen Lagerung einer Wippe 8 dient, die über Schleifstücke 9 an einen nicht näher veranschaulichten Fahrdraht andrückbar ist. Oberarm 4, Unterarm 3, Lenkerstange 5, Wippenführung 6 und Wippe 8 sind derart einander gelenkig zugeordnet, dass die Wippe 8 bei einer Verlagerung des Gestells 2 zwischen der Betriebsstellung BS gemäß Figur 1 und der Ruheposition RP gemäß Figur 2 entlang nahezu einer Geraden geführt ist.

Zu dieser Anordnung trägt auch die Anlenkung des Unterarms 3 und der Lenkerstange 5 an einen Grundrahmen 10 aus rechteckig miteinander verbundenen Profilen bei, der über Stützisolatoren 11 am Fahrzeugdach 12 des ansonsten nicht näher veranschaulichten Schienenfahrzeugs befestigt ist.

Während der Senkantrieb des Stromabnehmers 1 nicht näher veranschaulicht ist, besteht der Hubantrieb 13 aus einem Pneumatikbalg 14, der über ein Gestänge 15 mit Seilzügen 16 auf die Schwenkachse 17 des Unterarms 3 einwirkt.

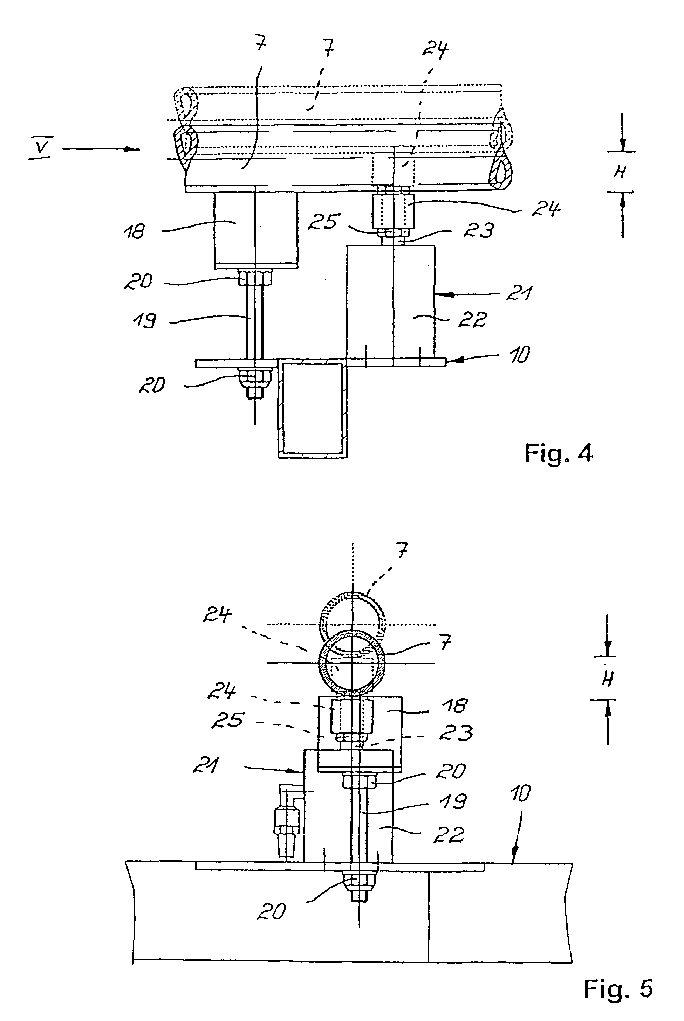

Auf dem Grundrahmen 10 sind in etwa dreieckiger Versetzung Puffer 18 in Form von Gummipuffern befestigt, auf denen sich das Gestell 2 einerseits über den Unterarm 3 und andererseits über die die Wippe 8 tragende Traverse 7 in der Ruheposition RP abstützt. Die Traverse 7 ist in der Figur 3 in strichpunktierter Linienführung angedeutet. Diese Puffer 18 sind, wie aus den Figuren 4 und 5 deutlich erkennbar, mittels Gewindebolzen 19 und Muttern 20 in der Höhe verstellbar und so der exakten Lage des Gestells 2 in der Ruheposition RP anpassbar.

Die Figuren 3 bis 5 zeigen, dass neben den Puffern 18 für die Traverse 7 pneumatisch beaufschlagbare Kolben-Zylinder-Einheiten 21 vorgesehen sind. Die Gehäuse 22 der Kolben-Zylinder-Einheiten 21 sind auf den Grundrahmen 10 geschraubt. Die nach oben aus den Gehäusen 22 ragenden Kolbenstangen 23 tragen Druckköpfe 24, die von unten an die Traverse 7 zur Anlage bringbar sind.

Sollte in der kalten Jahreszeit durch Vereisung eine Verklammerung der Traverse 7 mit den Puffern 18 stattfinden, so werden bei der Aktivierung des Hubantriebs 13 gleichzeitig die Kolben-Zylinder-Einheiten 21 aktiviert. Diese bringen eine Hubkraft auf, welche mit dazu dient, die Losbrechkraft zum Anheben des Gestells 2 aus der Ruheposition RP in Richtung auf die Betriebsstellung BS zu überwinden. Die Figuren 4 und 5 zeigen, dass der vergleichsweise geringe Hub H der Kolben-Zylinder-Einheiten 21 ausreicht, um die Verklammerung des Gestells 2 mit den Puffern 18 bei Vereisung aufzuheben.

### Bezugszeichenaufstellung

- 1 -: Stromabnehmer
- 2 -: Gestell v. 1
- 3 -: Unterarm v. 2
- 4 -: Oberarm v. 2
- 5 -: Lenkerstange v. 2
- 6 -: Wippenführung v. 2
- 7 -: Traverse an 4
- 8 -: Wippe
- 9 -: Schleifstücke
- 10 -: Grundrahmen
- 11 -: Stützisolatoren
- 12 -: Fahrzeugdach
- 13 -: Hubantrieb
- 14 -: Pneumatikbalg
- 15 -: Gestänge
- 16 -: Seilzüge
- 17 -: Schwenkachse v. 3
- 18 -: Puffer
- 19 -: Gewindebolzen
- 20-: Muttern
- 21 -: Kolben-Zylinder-Einheiten
- 22 -: Gehäuse v. 21
- 23-: Kolbenstangen v. 21
- 24-: Druckköpfe
- 25 -: Einstellmuttern

- BS -: Betriebsstellung v. 2
- H -: Hub v. 21
- RP -: Ruheposition v. 2

## Patentansprüche

1. Stromabnehmer für elektrisch betriebene Schienenfahrzeuge, der ein durch gelenkig miteinander verbundene Arme (3, 4, 5, 6, 7) gebildetes Gestell (2) und eine an das Gestell (2) angelenkte, an einen Fahrdraht andrückbare Wippe (8) aufweist, wobei das Gestell (2) in vertikaler Richtung bei Veränderung seiner Geometrie mittels eines Hubantriebes (13) zwischen einer oberen Betriebsstellung (BS) und einer eingefahrenen unteren Ruheposition (RP) verstellbar und in der Ruheposition (RP) auf Puffern (18) abgestützt ist, die dem Fahrzeugdach (12) eines Schienenfahrzeugs mindestens mittelbar zugeordnet sind, **dadurch gekennzeichnet, dass** Kolben-Zylinder-Einheiten (21) an einem Grundrahmen (10) befestigt sind, die das Gestell (2) aus seiner Ruheposition (RP) abdrücken, indem sie sich aus ihrer Ausgangsposition, die sich in einem bestimmten Abstand unterhalb des Gestells (2) befindet, in vertikaler Richtung von unten an das Gestell (2) anlegen und dieses nach oben abdrücken.

2. Stromabnehmer nach Patentanspruch 1, **dadurch gekennzeichnet, dass** die Puffer (18) am Grundrahmen befestigt und neben den Kolben-Zylinder-Einheiten (21) angeordnet sind.

3. Stromabnehmer nach Patentanspruch 1, **dadurch gekennzeichnet, dass** die Kolben-Zylinder-Einheiten (21) in die Puffer (18) integriert sind.

4. Stromabnehmer nach einem der Patentansprüche 1 bis 3, **dadurch gekennzeichnet, dass** die Gehäuse (22) der Kolben-Zylinder-Einheiten (21) auf einem das Gestell (2) tragenden, auf dem Fahrzeugdach (12) isoliert fixierten Grundrahmen (10) befestigt und den Kolbenstangen (23) zugeordnete Druckköpfe (24) an dem Gestell (2) zur Anlage bringbar sind.

5. Stromabnehmer nach einem der Patentansprüche 1 bis 4, **dadurch gekennzeichnet, dass** die Kolben-Zylinder-Einheiten (21) zugleich mit dem Hubantrieb (13) des Gestells (2) aktivierbar sind.

6. Stromabnehmer nach einem der Patentansprüche 1 bis 5 in Form eines Einholmstromabnehmers mit Unterarm (3), Oberarm (4), Lenkerstange (5), Wippenführung (6), Traverse (7) und Wippe (8), **dadurch gekennzeichnet, dass** die Kolben-Zylinder-Einheiten (21) an der die Wippe (8) tragenden Traverse (7) endseitig des Oberarms (4) zur Anlage bringbar sind.

## Claims

1. A current collector for electrically driven rail vehicles, with a pantograph (2) in the form of arms (3, 4, 5, 6, 7) that are connected to one another in an articulated fashion, and with a bow (8) that is coupled to the pantograph (2) and can be pressed against a contact wire, wherein a lifting drive (13) is used for vertically adjusting the pantograph (2) between an upper operative position (BS) and a lower idle position (RP) while simultaneously changing its geometry, and wherein said pantograph is supported on buffers (18) that are at least indirectly assigned to the roof (12) of a rail vehicle in the idle position (RP),
**characterized in that**
piston-cylinder units (21) are mounted on a base frame (10) in order to extract the pantograph (2) from its idle position (RP), namely by vertically displacing the piston-cylinder units from their starting position, in which they are situated a certain distance underneath the pantograph (2), such that they come in contact with the bottom of the pantograph (2) and the pantograph is extracted upward.

2. The current collector according to Claim 1,
**characterized in that**
the buffers (18) are mounted on the base frame and arranged adjacent to the piston-cylinder units (21).

3. The current collector according to Claim 1,
**characterized in that**
the piston-cylinder units (21) are integrated into the buffers (18).

4. The current collector according to one of Claims 1-3,
**characterized in that**
the housings (22) of the piston-cylinder units (21) are mounted on a base frame (10) that carries the pantograph (2) and is fixed on the vehicle roof (12) in an insulated fashion, and **in that** pushbuttons (24) assigned to the piston rods (23) can be brought in contact with the pantograph (2).

5. The current collector according to one of Claims 1-4,
**characterized in that**
the piston-cylinder units (21) can be activated simultaneously with the lifting drive (13) of the pantograph (2).

6. The current collector according to one of Claims 1-6 in the form of a one-leg pantograph with a lower arm (3), an upper arm (4), a steering rod (5), a bow guide (6), a crosshead (7) and a bow (8),
**characterized in that**
the piston-cylinder units (21) can be brought in contact with the crosshead (7) that carries the bow (8) on the terminal side of the upper arm (4).

## Revendications

1. Collecteur de courant pour véhicules ferroviaires fonctionnant à l'électricité, qui présente un bâti (2) formé par des bras (3, 4, 5, 6, 7) reliés entre eux de manière articulée et un archet (8) articulé au bâti (2) comprimable contre un fil aérien, le bâti (2) étant réglable dans le sens vertical lors de la modification de sa géométrie au moyen d'une propulsion de levage (13) entre une position de fonctionnement supérieure (BS) et une position de repos inférieure rentrée (RP) et s'appuyant en position de repos (RP) sur des tampons (18) qui sont associés au moins indirectement au toit du véhicule (12) d'un véhicule ferroviaire,
**caractérisé en ce que**
sont fixées au châssis de base (10) des unités à pistons-cylindres (21) qui poussent le bâti (2) hors de sa position de repos (RP) en se plaçant, en partant de leur position de départ qui se trouve à une certaine distance sous le bâti (2), dans le sens vertical par le bas sur le bâti (2) et en le poussant vers le haut.

2. Collecteur de courant selon la revendication 1 du brevet,
**caractérisé en ce que**
les tampons (18) sont fixés sur le châssis de base et sont disposés près des unités à pistons-cylindres (21).

3. Collecteur de courant selon la revendication 1 du brevet,
**caractérisé en ce que**
les unités à pistons-cylindres (21) sont intégrées dans les tampons (18).

4. Collecteur de courant selon l'une quelconque des revendications 1 à 3 du brevet,
**caractérisé en ce que**
les boîtiers (22) des unités à pistons-cylindres (21) sont fixés sur un châssis de base (10) fixé isolément sur le toit du véhicule (12) et supportant le bâti (2) et que des boutons-poussoirs (24) associés aux tiges de pistons (23) peuvent être amenés en contact avec le bâti (2).

5. Collecteur de courant selon l'une quelconque des revendications 1 à 4 du brevet,
**caractérisé en ce que**
les unités à pistons-cylindres (21) peuvent être activées en même temps que la propulsion de levage (13) du bâti (2).

6. Collecteur de courant selon l'une quelconque des revendications 1 à 5 du brevet, se présentant sous forme d'un collecteur de courant à un longeron comportant un bras inférieur (3), un bras supérieur (4), une barre de direction (5), un guide d'archet (6), une traverse (7) et un archet (8),
**caractérisé en ce que**
les unités à pistons-cylindres (21) peuvent être amenées en contact avec la traverse (7) supportant l'archet (8) à l'extrémité du bras supérieur (4).
